# EUROPÄISCHE PATENTANMELDUNG

(11) **EP 3 643 558 A1**
(43) Veröffentlichungstag der Anmeldung: **29.04.2020**
(21) Anmeldenummer: 19203455.1
(22) Anmeldetag: 16.10.2019
(51) Int. Cl.: B60N 2/015, B60N 2/68

(54) **RAHMENGESTELL EINER SITZANORDNUNG EINES FAHRZEUGS**

(30) Priorität: 24.10.2018 DE 102018126482
(71) Anmelder: Aguti Produktentwicklung & Design GmbH, 88085 Langenargen (DE)
(72) Erfinder: Rogg, Christian, 88142 Wasserburg (DE)
(74) Vertreter: Otten, Roth, Dobler & Partner mbB Patentanwälte

(57) **Zusammenfassung**

Es wird ein Rahmengestell (1) einer Sitzanordnung eines Fahrzeugs vorgeschlagen, wobei das Rahmengestell (1) einen Grundrahmen (2) zur lösbaren Verbindung des Grundrahmens (2) an einem Fahrzeugboden (4) aufweist, wobei Verbindungsmittel (3) eine dem Fahrzeugboden (4) zuordenbare Bodenschiene (5, 6) und einen auf die Bodenschiene (5, 6) abgestimmten und dem Grundrahmen (2) zugeordeneten Verbindungsabschnitt (7) umfassen, wobei im Verbindungszustand eine Anlageseite (8) des Verbindungsabschnitts (7) an einer Anlageseite (9) der Bodenschiene (5, 6) anliegt. Erfindungsgemäß sind an einer Anlageseite (8) wenigstens zwei vorstehend gestaltete Steckelemente mit einem Schaftabschnitt und einem zum Schaftabschnitt durchmessergrößeren Kopfabschnitt und an der anderen Anlageseite (9) zwei oder mehr auf die Steckelemente passend abgestimmte Ausnehmungen (17) mit einem Hinterschnittbereich vorhanden, so dass die Verbindung durch eine Hintergriffverbindung zwischen den Steckelementen und den zugehörigen Ausnehmungen realisierbar ist, wobei bei eingerichteter Hintergriffverbindung die Steckelemente in die Ausnehmungen (17) greifen und der Kopfabschnitt den Hinterschnittbereich hintergreift.

## Beschreibung

### Stand der Technik

Zur Bestückung von Fahrzeugen mit Inneneinrichtungen, welche an einem Fahrzeugboden des Fahrzeugs wie zum Beispiel einer Bodenplatte eines Kraftfahrzeugs aufgenommen sind, werden unterschiedliche Lösungen verfolgt. Für Sitzanordnungen kommen insbesondere Schraubverbindungen zum Anschrauben eines Rahmen- bzw. Grundgestells der Sitzanordnung zum Einsatz.

Diese Systeme sind häufig mit einem erhöhten Montageaufwand verbunden bzw. nicht geeignet für die unkomplizierte und schnelle Positionierung der Inneneinrichtung im Fahrzeug an individuell ausgewählten bzw. unterschiedlichen Stellen im Fahrzeug.

### Aufgabe und Vorteile der Erfindung

Aufgabe der vorliegenden Erfindung ist es, die Anbringung einer Sitzanordnung in einem Fahrzeug zu verbessern, insbesondere im Hinblick auf eine flexible Positionierung im Fahrzeug und eine montagefreundliche Lösung.

Diese Aufgabe wird durch die unabhängigen Ansprüche gelöst.

Die abhängigen Ansprüche betreffen vorteilhafte Varianten der Erfindung.

Die Erfindung geht aus von einem Rahmengestell einer Sitzanordnung eines Fahrzeugs, wobei das Rahmengestell einen Grundrahmen und Verbindungsmittel zur lösbaren Verbindung des Grundrahmens an einem Fahrzeugboden aufweist, wobei die Verbindungsmittel eine dem Fahrzeugboden zuordenbare Bodenschiene und einen auf die Bodenschiene abgestimmten und dem Grundrahmen zuordenbaren Verbindungsabschnitt umfassen, wobei im Verbindungszustand eine Anlageseite des Verbindungsabschnitts an einer Anlageseite der Bodenschiene anliegt. Die Bodenschiene ist vorzugsweise als längliches Stahlprofil ausgebildet mit einer Unterseite zur Auflage auf einer Oberseite des Fahrzeugbodens. Eine der Unterseite gegenüberliegenden Oberseite der Bodenschiene weist zumindest abschnittsweise die bevorzugt ebene Anlageseite auf. Der Verbindungsabschnitt weist eine zumindest abschnittsweise ebene Seite bzw. Unterseite auf, welche im Verbindungszustand von Grundrahmens und Fahrzeugboden der Oberseite der Bodenschiene zugewandt ist, vorzugsweise sich im Anlagekontakt mit der Oberseite der Bodenschiene befindet. Die Bodenschiene ist flexibel an einem vorgegebenen mechanisch stabilisierten Bereich wie zum Beispiel einem mit einem Strebenelement verstärkten Bereich oder an beliebiger Stelle am Fahrzeugboden befestigbar, z. B. anschraubbar oder anschweißbar. Die Verbindungsmittel können genau eine Bodenschiene oder können mehrere Bodenschienen umfassen. Bei mehreren Bodenschienen können diese parallel versetzt sein und/oder in Längsrichtung beabstandet hintereinander bzw. fluchtend vorhanden sein.

Der Kern der Erfindung liegt darin, dass an einer Anlageseite wenigstens zwei vorstehend gestaltete Steckelemente mit einem Schaftabschnitt und einem zum Schaftabschnitt durchmessergrößeren Kopfabschnitt und an der anderen Anlageseite zwei oder mehr auf die Steckelemente passend abgestimmte Ausnehmungen mit einem Hinterschnittbereich vorhanden sind, so dass die Verbindung durch eine Hintergriffverbindung zwischen den Steckelementen und den zugehörigen Ausnehmungen realisierbar ist, wobei bei eingerichteter Hintergriffverbindung die Steckelemente in die Ausnehmungen greifen und der Kopfabschnitt den Hinterschnittbereich hintergreift. Die vorzugsweise zwei Steckelemente sind an der Anlageseite so ausgebildet, dass diese zur anderen Anlageseite vorstehen, also nach außen vorstehen. Die andere Anlageseite deckt vorzugsweise einen Hohlraum der Bodenschiene ab. Der Hohlraum trägt zur Bildung des Hinterschnitts bzw. der Hintergriffverbindung gemeinsam mit einer den Hohlraum begrenzenden und die Ausnehmungen umfassenden Wand der Bodenschiene bei. Die Außenseite der Wand bildet auch die Anlageseite der Bodenschiene.

Der hinter der Anlageseite vorhandene Hohlraum ist ausgebildet, im Verbindungszustand die Steckelemente zumindest teilweise aufzunehmen. Vorzugsweise tauchen die Steckelemente im Verbindungszustand komplett in den Hohlraum ein.

Die zwei vorstehenden Steckelemente sind vorzugsweise identisch gestaltet. Im Verbindungszustand mit der Hintergriffverbindung ist vorteilhaft ein Abheben des Grundrahmens in normaler Richtung zur Anlagefläche der Bodenschiene durch den hintergreifenden Kopfabschnitt unterbunden. Dabei wirkt der Hinterschnittbereich bzw. die Wand der Anlageseite als mechanischer Anschlag für den Kopfabschnitt. Der Hinterschnittbereich umfasst vorzugsweise einen Hohlraum, der von einer die Anlageseite bildenden Wand überdeckt ist bzw. der durch ein Inneres eines hohlen Abschnitts der Anlageseite bereitgestellt ist. In der Wand der Anlageseite, die den Hohlraum abdeckt, sind die Ausnehmungen bzw. Öffnungen vorhanden, welche z. B. herausgestanzt oder lasergeschnitten sind.

Die Steckelemente und die Ausnehmungen sind insbesondere so ausgestaltet, dass durch nacheinander stattfindende Steck- und Schiebbewegung des Grundrahmens relativ zur Bodenschiene der Verbindungszustand einrichtbar ist, was montagefreundlich ist. Ein Monteur muss lediglich die Steckelemente und die Ausnehmungen passend zueinander bringen, so dass die Steckelemente gegenüber von jeweils zugehörigen Ausnehmungen kommen und darin eintauchen bzw. eingreifen können. Dann wird der Grundrahmen in Eintauch- bzw. in Eingreifrichtung bewegt, wobei die Steckelement in die Ausnehmungen eintauchen bzw. eingreifen. Dies erfolgt soweit, bis die Anlageseiten vorzugsweise in gegenseitigen Kontakt gebracht sind. Dann wird der Grundrahmen zur Bodenschiene bis zu einer Anschlagstellung verschoben, so dass der Verbindungszustand erreicht ist. Das Verschieben erfolgt geführt, da sich die Anlageseiten gegenseitig abstützen und als Gleitflächen dienen. Die Verschiebung erfolgt vorzugsweise über einen vergleichsweise kurzen Verschiebeweg von z. B. wenigen Millimetern bzw. wenigen Zentimetern in Längsrichtung der Bodenschiene. Das Verschieben ist möglich, da der Kopfabschnitt eine relativ kurze bzw. begrenzte axiale Länge des Steckelements ausmacht und im durchgehend offen Hohlraum aufgenommen ist und der Schaftabschnitt in dem schmaleren Öffnungsabschnitt der Ausnehmung verschiebbar ist.

Mit der Erfindung ist eine variable und praktische Positionierung des Grundrahmens in Längsrichtung der Bodenschienen im Inneren des Fahrzeugs möglich bzw. in der jeweilig gewünschten Position der Sitzanordnung im Inneren des Fahrzeugs einrichtbar.

Vorteilhaft umfasst der Verbindungsabschnitt ein Adapterelement, das dem Grundrahmen zuordenbar ist, insbesondere an dem Grundrahmen anordenbar ist. Damit kann der Grundrahmen wahlweise bzw. flexibel für die erfindungsgemäße Verbindung ausgebildet werden. Bestehende Grundrahmen lassen sich nachträglich mit einem Adapterelement versehen, so dass die vorliegende Erfindung nutzbar ist. Es muss dann lediglich noch eine oder mehrere Bodenschienen am Fahrzeugboden befestigt werden. Das Adapterelement ist insbesondere fest fixiert bzw. positionsfest angebracht am Grundrahmen. An dem Adapterelement sind entweder die Ausnehmungen oder die Steckelemente ausgebildet. Dann sind dazu komplementär an der Bodenschiene entweder die Steckelemente oder die Ausnehmungen vorhanden.

Es ist außerdem vorteilhaft, dass eine Ausnehmung eine Öffnung auf der Anlageseite umfasst, wobei die Öffnung einen ersten Öffnungsabschnitt und einen an den ersten Öffnungsabschnitt anschließenden zweiten Öffnungsabschnitt aufweist, wobei der erste Öffnungsabschnitt ein größeres Öffnungsmaß aufweist als der zweite Öffnungsabschnitt. Die Kontur der Ausnehmung ist beispielsweise der Kontur eines Schlüssellochs für einen Bartschlüssel nachempfunden bzw. angenähert. Die Kontur kann alternativ eine andere alternierende Form mit abwechselnd größerem und kleinerem Öffnungsmaß sein, z. B. in der Art eines Rechteck-Zahnprofils.

Das Öffnungsmaß des ersten bzw. größeren Öffnungsabschnitts ist für ein passendes Durchgreifen des Kopfabschnitts eines dazugehörigen Steckelements abgestimmt, wobei ein Außenmaß des Kopfabschnitts nur geringfügig kleiner ist als ein Außenmaß des ersten Öffnungsabschnitts. Das Öffnungsmaß des zweiten bzw. schmaleren Öffnungsabschnitts ist für ein passendes Durchgreifen des Schaftabschnitts abgestimmt, wobei ein Außenmaß des Schaftabschnitts nur geringfügig kleiner ist als ein Außenmaß des zweiten Öffnungsabschnitts.

Wenn der Grundrahmen bei der Montage quer zur Längsrichtung der Bodenschiene an diese positionsrichtig heranbewegt wird, wobei die Längsachse der Steckelemente und die Mitte des ersten Öffnungsabschnitts fluchten, taucht der Kopfabschnitt des Steckelements über einen geringen Abstand zum Rand des ersten Öffnungsabschnitts in diesen ein. Der Kopfabschnitt bewegt sich am Rand des ersten Öffnungsabschnitts vorbei in den Hohlraum hinter der Anlageseite. Diese Bewegung wird begrenzt, wenn die Anlageseite des Verbindungsabschnitts am Grundrahmen und die Anlageseite der Bodenschiene in gegenseitige Anlage gelangen.

Dann wird der Grundrahmen so relativ zur Bodenschiene in Längsrichtung der Bodenschien bewegt bzw. Anlageseite an Anlageseite verschoben, dass der Schaftabschnitt in den zweiten Öffnungsabschnitt hineinverschoben. Der Kopfabschnitt gelangt in den Bereich hinter dem zweiten Öffnungsabschnitt, was die Hintergriffverbindung darstellt. Dabei hintergreift der größere Kopfabschnitt den schmaleren Rand des zweiten Öffnungsabschnitts. Da wenigstens zwei bzw. genau zwei Steckelemente oder zwei Paare mit je zwei Steckelementen vorhanden sind, erfolgt die Verbindung über beide Steckelemente wie oben skizziert simultan bzw. identisch.

Mit dem Erreichen der Endstellung des fertig positionierten Grundrahmens ist dies für den Monteur spürbar bzw. hörbar, da dann der Schaftabschnitt an einem Ende des zweiten Öffnungsabschnitts anstößt, welches dem ersten Öffnungsabschnitt abgewandt ist. In diese Richtung ist dann der Grundrahmen an der Bodenschiene nicht weiter verschiebbar.

Für den Fall, dass die Steckelemente dem Grundrahmen zugeordnet bzw. zugehörig sind, weist die Bodenschiene auf ihrer Oberseite eine Vielzahl von gleichen bzw. identischen Ausnehmungen auf, die bevorzugt regelmäßig angeordnet sind, vorzugsweise mit jeweils gleichem Abstand zwischen zwei benachbarten Ausnehmungen. Der Abstand der benachbarten Ausnehmungen ist auf den Abstand der beiden Steckelemente passend abgestimmt, so dass bei der Montage die beiden Steckelemente in die dazugehörigen Ausnehmungen eintauchen können.

Gemäß einer vorteilhaften Variante sind die mehreren Ausnehmungen miteinander verbunden. Dies bedeutet, dass auf der dazugehörigen Anlageseite, vorzugsweise auf einer Oberseite der Bodenschiene eine durchgehende längliche Öffnung vorhanden ist, gebildet aus verbundenen Ausnehmungen. Die längliche Öffnung weist eine regelmäßige Form auf mit alternierenden breiteren Öffnungsabschnitten und schmaleren Öffnungsabschnitten bzw. mit alternierend ersten und zweiten Öffnungsabschnitten. Die breiteren Öffnungsabschnitte ermöglichen das passende Durchgreifen des Kopfabschnitts eines Steckelements und die schmaleren Öffnungsabschnitte ermöglichen das passende Durchgreifen des Schaftabschnitts eines Steckelements jeweils mit geringem Spiel bzw. geringem Spaltabstand.

Die mehreren verbundenen Ausnehmungen weisen demgemäß eine durchgehende Öffnungskontur auf, z. B. eine perlkettenartige Öffnungskontur.

Nach einer Alternative der Erfindung sind die mehreren Ausnehmungen miteinander nicht verbunden, wobei jede einzelne Ausnehmung einen ersten Öffnungsabschnitt und einen zweiten an den ersten Öffnungsabschnitt anschließenden zweiten Öffnungsabschnitt aufweist, wobei die beiden Öffnungsabschnitte miteinander offen verbunden sind bzw. ineinander übergehen. Die beiden Öffnungsabschnitte unterscheiden sich in der Öffnungsbreite bzw. weisen eine ersten durchmessergrößeren und einen zweiten durchmesserkleineren Öffnungsabschnitt auf. Demgemäß sind die mehreren vorzugsweise identischen Ausnehmungen jeweils getrennt voneinander durch einen Steg des Wandabschnitts der Anlageseite bzw. ist, abgesehen von einer ersten und einer letzten Ausnehmung, bei jeder Ausnehmung beidseitig bzw. ist vor und hinter der betrachteten Ausnehmung jeweils eine benachbarte Ausnehmung vorhanden. Die mehreren Ausnehmungen liegen vorzugsweise alle identisch räumlich ausgerichtet auf einer Linie hintereinander auf der Anlageseite.

Ein Vorteil wird erreicht, wenn an der Bodenschiene eine Vielzahl von identisch gestalteten Ausnehmungen hintereinander entlang der Länge der Bodenschiene vorhanden sind. Vorzugsweise sind mehr als drei insbesondere mehr als vier bis zum Beispiel zwanzig oder mehr Ausnehmungen an einer Bodenschiene bzw. beispielsweise pro Meter der Bodenschiene vorhanden.

Bei der Variante, wonach die Ausnehmungen in der Bodenschiene vorgesehen sind, sind die Ausnehmungen entlang der Länge bzw. in Längsrichtung der Bodenschiene auf deren Oberseite ausgestaltet. Auf der Anlageseite bzw. auf der Oberseite der Bodenschiene sind die Ausnehmungen zur Breite der Oberseite vorzugsweise mittig positioniert.

Als Basis der Bodenschiene dient vorzugsweise ein längliches schlankes Hohlprofil wie eine Stahlschiene mit z. B. Rechteck-Hohlquerschnitt. Zumindest auf einer flachen ebenen Seite der Hohlprofilschiene bzw. der Oberseite, die durch eine Wand des Hohlprofils gebildet ist, sind die Ausnehmungen vorhanden. Die Bodenschiene liegt mit der zur Oberseite gegenüberliegenden Unterseite auf dem Fahrzeugboden auf und ist an diesem befestigt.

Es ist darüber hinaus von Vorteil, wenn die Steckelemente starr und unbeweglich an der Anlageseite vorhanden sind. Dies ermöglicht eine feste bzw. mechanisch hochbelastbare Fixierung des Grundrahmens an der Bodenschiene. Die Steckelemente bestehen vorzugsweise ebenfalls aus einem Stahlmaterial und sind fest mit der Anlageseite verbunden, zum Beispiel angeschweißt oder angeschraubt.

Eine vorteilhafte Modifikation der Erfindung zeichnet sich dadurch aus, dass die Bodenschiene als Flachmaterial gebildet ist, auf deren Oberseite die Steckelemente ausgebildet sind. Damit kann der Grundrahmen vergleichsweise sehr flach bauend auf dem Fahrzeugboden angebunden werden. Die Ausnehmungen sind dann an dem Grundrahmen bzw. dem Adapterelement vorgesehen.

Es ist überdies vorteilhaft, dass das Adapterelement zwei erste Steckelemente, die auf einer ersten geraden Linie beabstandet zueinander positioniert sind, und zwei zweite Steckelemente, die auf einer zweiten geraden Linie beabstandet zueinander positioniert sind, umfasst, wobei die erste und die zweite Linie parallel ausgerichtet sind. Die Linien sind vorzugsweise quer zu einer Breitenrichtung des Rahmengestell ausgerichtet bzw. parallel zur bzw. in Sitzrichtung der mit dem Rahmengestell bereitstellbaren Sitzanordnung.

Damit kann der Grundrahmen stabil und kippsicher an dem Fahrzeugboden befestigt werden. Durch die zweireihige Anordnung der Steckelemente wird eine besonders stabile Verbindung einrichtbar.

Bei der zweireihigen Anordnung der Steckelemente am Adapterelement ist es vorteilhaft, wenn die Verbindungsmittel genau zwei getrennte Bodenschienen umfassen. Alternativ ist es nicht ausgeschlossen, eine vergleichsweise breitere einzige Bodenschiene mit zwei zu den Steckelementen passenden Reihen von Ausnehmungen vorzusehen. Die Steckelemente und die Ausnehmungen sind für ein passendes Ineinandergreifen bzw. Zusammenwirken aller vier Steckelemente mit vier Ausnehmungen ausgebildet.

Vorzugsweise sind alle Steckelemente identisch ausgebildet und mit gleichem Abstand untereinander auf der jeweiligen Linie. Demgemäß sind die Abstände der Steckelemente der ersten Linie identisch zu den Abständen der Steckelemente auf der zweiten Linie. Vorzugsweise fluchten die Steckelemente der ersten Linie seitlich zu dem jeweils benachbarten Steckelement der anderen Linie.

Bei einer zweireihigen Anordnung mit je zwei auf einer Linie liegenden Steckelementen ist es vorzugsweise, dass die zwei Steckelemente einer Linie in zwei Ausnehmungen einer ersten Bodenschiene greifen und die beiden weiteren Steckelemente der anderen Linie in zwei Ausnehmungen einer zweiten Bodenschiene greifen.

Anstelle der zweireihigen Anordnung der Steckelemente am Adapterelement ist eine einreihige Anordnung möglich mit mehreren bzw. bevorzugt genau zwei Steckelementen auf einer Linie hintereinander. Dann ist nur genau eine Bodenschiene als Gegenstück der Verbindungsmittel nötig. Dies ist wirtschaftlich und im Hinblick auf ein geringeres Gesamtgewicht vorteilhaft.

Wenn auf ein Adapterelement verzichtet werden soll, können alternativ zur Anordnung der Steckelemente an dem Adapterelement die Steckelemente auch unmittelbar z. B. an einer Unterseite eines Abschnitts des Grundrahmens wie zum Beispiel einer unterseitig am Grundrahmen vorhandenen Längs- und/oder Querstrebe des Grundrahmens abstehend vorhanden sein.

Ein Vorteil des Adapterelements liegt darin, dass bestehende Rahmengestelle mit Grundrahmen gegebenenfalls nachträglich zu einem erfindungsgemäßen Rahmengestell auf einfache und flexible Weise nachrüstbar sind.

Nach einer vorteilhaften Modifikation der Erfindung ist das Adapterelement als ein Bauteil ausgebildet, das zwischen einer Boden-Querstrebe des Grundrahmens und einem unterer Endbereich einer Stützfußanordnung des Grundrahmens angeordnet ist. Mit dem Adapterelement wird ein untenliegender Endbereich des Grundrahmens passend ausgebildet für die Anbindung des Grundrahmens an der Bodenschiene. Dabei ist es vorteilhaft, wenn das Adapterelement ausgebildet ist, dass das Adapterelement passend an unterschiedlich gestalteten Grundrahmen anbringbar ist.

An dem Grundrahmen kann zum Beispiel eine Stützfußanordnung vorhanden sein, mit welcher vorteilhaft Kräfte und Momente aufgenommen werden können. Die Stützfußanordnung kann genau eine Stützfußstrebe oder kann mehrere z. B. zwei im Einbauzustand des Rahmengestells im Fahrzeug zum Beispiel bzw. vorzugsweise gerade und schräg zur Senkrechten geneigte, beispielsweise um ca. 45 Winkelgrade zur Senkrechten geneigte, längliche bzw. profilförmige Stützfußstreben aufweisen. Die Stützfußstreben greifen mit ihrem oberen Ende beispielsweise an einer horizontalen Querstrebe des Grundrahmens fest fixiert an, wobei die Querstrebe im Bereich einer Sitzfläche der mit dem Rahmengestell bildbaren Sitzanordnung als Sitzflächen-Querstrebe vorhanden ist. Der Angriff der Stützfußstreben erfolgt zum Beispiel im Bereich zwischen zwei mit der Querstrebe verbundenen Vertikalstützen des Grundrahmens. Von der Querstrebe erstrecken sich die Stützfußstreben vorzugsweise schräg nach vorne in Sitzrichtung der Sitzanordnung, so dass ein unteres Ende der Stützfußstreben, auf vertikaler Höhe des unteren Endes von Vertikalstützen des Grundrahmens, nach vorne versetzt ist. Mit dem unteren Ende der Stützfußstreben stützt sich der Grundrahmen an dem Fahrzeugboden ab, zusätzlich zur Abstützung mit dem unteren Enden der Vertikalstützen bzw. mit einem in der Regel zwischen den unteren Enden der Vertikalstützen vorhandenen Querelement wie einer Fuß-Querstrebe. Im Belastungsfall wie z. B. einem Auffahrunfall des Fahrzeugs werden über die Verbindung zu den Bodenschienen insbesondere Druckkräfte aber auch Zugkräfte zwischen dem Grundrahmen und dem Fahrzeugboden übertragen.

Die Stützfußanordnung wirkt am Grundrahmen mechanisch stabilisierend bzw. wirkt zum Beispiel in Sitzrichtung der betreffenden Sitzanordnung kippsichernd.

Das Adapterelement ist vorzugsweise so ausgebildet, dass es mit einem Abschnitt an der Fuß-Querstrebe fest verbindbar bzw. daran fixiert ist und mit einem Abschnitt an dem unteren Ende des einen oder der mehreren bzw. der beiden Stützfußstreben fest verbindbar ist bzw. fixiert ist, oder mit einem quer zwischen den unteren Enden der mehreren z. B. beiden Stützfußstreben vorhandenen Querelement.

Das Adapterelement kann vorzugsweise für eine universelle Anbringung an verschiedenen Grundrahmen-Typen vorbereitet ausgestaltet sein, insbesondere unabhängig davon, ob die Stützfußanordnung genau eine Stützfußstrebe oder mehrere Stützfußstreben umfasst.

Alternativ kann für jeden Grundrahmen-Typ ein darauf abgestimmtes Adapterelement verwendet werden.

Bei angebrachtem Adapterelement bildet dieses z. B. ein stabilisierendes Bodenblech des Grundrahmens. Demgemäß ist das Adapterelement vorzugsweise als ein flaches Bauteil mit ebenen Flächenseiten ausgebildet, insbes. plattenförmig bzw. streifenförmig ausgebildet. Das Adapterelement ist z. B. eine Viereckplatte oder streifenförmig.

Ein anderer Vorteil ergibt sich, wenn Fixiermittel zur Fixierung des Grundrahmens an der Bodenschiene bei eingerichteter Hintergriffverbindung vorhanden sind, wobei mit den Fixiermitteln ein Verschieben des Grundrahmens in Längsrichtung der Bodenschiene in zumindest eine Schieberichtung unterbunden ist. Die Fixiermittel dienen zur vorzugsweise lösbaren aber festen Sicherung des montierten Grundrahmens gegen ein Verschieben in Längsrichtung der Bodenschien, wenn der Grundrahmen die gewünschte Montageposition einnimmt. Die Fixiermittel können selbsttätig sich einrichtende Rastmittel oder zum Beispiel zwischen Grundrahmen und Bodenschiene wirkende Feststellschrauben umfassen.

Gemäß einer vorteilhaften Variante der Erfindung sind an dem Adapterelement zwei erste Ausnehmungen, die auf einer ersten Linie beabstandet zueinander positioniert sind, und zwei zweite Ausnehmungen, die auf einer zweiten Linie beabstandet zueinander positioniert sind, vorhanden, wobei die erste und die zweite Linie parallel ausgerichtet sind. Diese Variante ist für eine Verbindung des Grundrahmens mit zwei an dem Fahrzeugboden anbringbaren Bodenschienen ausgebildet. An den beiden Bodenschienen sind jeweils zumindest zwei nach oben vorstehende Steckelemente vorhanden, welche passend abgestimmt sind auf die Ausnehmungen an dem Adapterelement.

Alternativ kann nur genau eine Bodenschiene mit zumindest zwei nach oben vorstehenden Steckelementen, die auf einer Linie versetzt zueinander vorgesehen sind, und ein Adapterelement am Grundrahmen vorhanden sein, wobei das Adapterelement genau zwei Ausnehmungen in einer Linie hintereinander aufweist, für das passende Zusammenwirken mit den zumindest zwei Steckelementen.

Vorteilhaft umfassen die Verbindungsmittel zwei parallel ausgerichtete Bodenschienen. Zwei parallele Bodenschienen, die parallel zur Fahrrichtung des Fahrzeugs in diesem auf dem Fahrzeugboden anordenbar sind, ist für eine stabile Anbindung des Grundrahmens im Fahrzeug vorteilhaft.

Alternativ umfassen die Verbindungsmittel genau eine Bodenschiene. Dies ist material- und gewichtsparend und im Hinblick auf eine einfache und schnelle Montage vorteilhaft.

Die Erfindung bezieht sich auch auf eine Sitzanordnung eines Fahrzeugs mit einem Rahmengestell, das gemäß einer der oben diskutierten Ausbildungen gestaltet ist. Die Sitzanordnung kann als Fahrzeug-Einersitz oder als Sitzbank für die Bereitstellung von zwei oder mehr Sitzplätzen ausgebildet sein. Dann ist das Rahmengestell entsprechend ausgestaltet bzw. weist eine erhöhte Breite bzw. mehrere Vertikalstützen und z. B. breitere Querstreben auf bzw. eine entsprechende Stützfußanordnung.

Schließlich erstreckt sich die Erfindung auf ein Fahrzeug mit einer Sitzanordnung, die ein Rahmengestell nach einer der oben beschriebenen Ausbildungen aufweist. Das Fahrzeug ist zum Beispiel ein Wohnmobil, ein Camping- oder Nutzfahrzeug oder dergleichen.

### Figurenbeschreibung

Weitere Merkmale und Vorteile der Erfindung sind anhand von verschiedenen in den Figuren schematisch dargestellten Ausführungsformen der Erfindung näher erläutert. Im Einzelnen zeigt:
- Fig. 1: eine erste Ausführungsform eines erfindungsgemäßen Rahmengestells in perspektivischer Ansicht schräg von oben mit teilweise gezeigten Bodenschienen,
- Fig. la: den in Fig. 1 umrandeten Bereich A vergrößert senkrecht von oben,
- Fig. 2: die Anordnung gemäß Fig. 1 in einem Montageschritt, wobei die Anordnung gegenüber Fig. 1 vereinfacht von der Seite mit geschnitten gezeigter Bodenschiene in einem Montagezustand mit einem von den Bodenschienen beabstandeten Grundrahmen dargestellt ist,
- Fig. 3: eine zweite Ausführungsform eines erfindungsgemäßen Rahmengestells in perspektivischer Ansicht schräg von oben mit teilweise gezeigten Bodenschienen,
- Fig. 4: eine weitere Ausführungsform eines erfindungsgemäßen Rahmengestells mit teilweise gezeigter Bodenschiene, wobei die Anordnung vereinfacht von der Seite in einem Montagezustand mit einem von der Bodenschiene beabstandeten Grundrahmen dargestellt ist und
- Fig. 4a: einen kreisförmig umrandeten Bereich einer senkrecht von unten betrachteten Unterseite des Grundrahmens gemäß Fig. 4.

Für entsprechende Elemente von unterschiedlichen in den Figuren dargestellten Ausführungsbeispielen sind teilweise die gleichen Bezugszeichen verwendet.

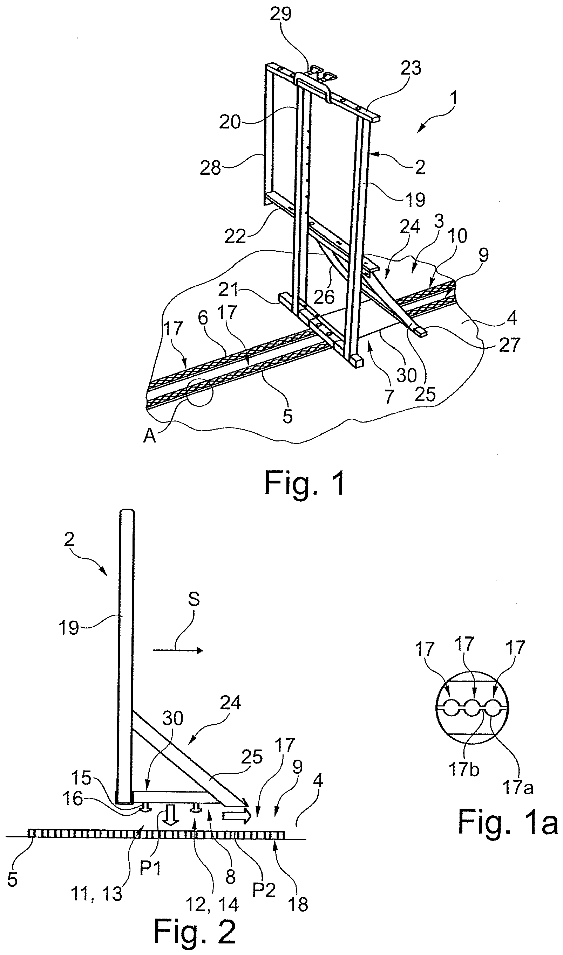

Fig. 1 zeigt ein erfindungsgemäßes Rahmengestell 1, das zur Bildung einer Sitzanordnung in einem Fahrzeug ausgebildet ist, zum Beispiel für eine Einer- oder eine Mehrfach-Sitzanordnung. Hierfür müssen an dem Rahmengestell 1 weitere in den Figuren nicht gezeigte Elemente der Sitzanordnung wie zum Beispiel Polsterelemente und weitere Komponenten eines Gurt-Rückhaltesystems bzw. einer Sicherheitsgurtanordnung angebracht werden. Das Rahmengestell 1 umfasst als Hauptkomponente einen Grundrahmen 2 und Verbindungsmittel 3 zur lösbaren Verbindung des Grundrahmens 2 an einem horizontal ausgerichteten Fahrzeugboden 4 im Inneren eines betreffenden Fahrzeugs.

Die Verbindungsmittel 3 weisen einen Verbindungsabschnitt 7 am Grundrahmen 2 und zwei identische Bodenschienen 5 und 6 auf, die dem angedeutet gezeigten Fahrzeugboden 4 wie zum Beispiel eine Bodenplatte des nicht weiter dargestellten Fahrzeugs zuordenbar bzw. daran anbringbar sind. Die Bodenschienen 5, 6 sind vorzugsweise jeweils als Hohlprofil mit ebener Oberseite und ebener Unterseite zum Beispiel als Viereckhohlprofil gebildet.

Der Grundrahmen 2 ist aus mehreren vorzugsweise geraden Profilelementen zusammengebaut und umfasst im dargestellten Ausführungsbeispiele zwei im Nutz- bzw. Einbauzustand senkrechte Vertikalstützen 19, 20 und horizontale bzw. quer zu den Vertikalstützen 19, 20 ausgerichtete Querstreben 21 bis 23. Die Querstreben umfassen eine untere Querstrebe 21, eine mittlere Querstrebe 22 und eine obere Querstrebe 23.

Außerdem ist eine Stützfußanordnung 24 vorhanden, welche an der mittleren Querstrebe 22 angreift und sich schräg zur Vertikalen bis zu den Bodenschienen 5, 6 nach vorne in eine Sitzrichtung S der Sitzanordnung erstreckt. Die Stützfußanordnung 24 umfasst zwei gerade, schräg ausgerichtete Streben 25, 26 und eine Stützfußanordnung-Querstrebe 27, welche sich auf den Bodenschienen 5, 6 aufliegend abstützt.

Parallel zu den Vertikalstützen 19, 20 ist außerdem ein Verbindungsstück 20 vorhanden, welches auf einer zur Vertikalstütze 19 gehörigen Seite des Grundrahmens 2 die stirnseitigen Enden der mittleren Querstrebe 22 und der oberen Querstrebe 23 miteinander verbindet.

Außerdem ist an der oberen Querstrebe 23, ungefähr mittig zwischen den beiden Vertikalstützen 19 und 20, eine Komponente 29 eines an dem Rahmengestell 1 anbringbaren Gurt-Rückhaltesystems fest fixiert.

Des Weiteren ist ein flächiges bzw. plattenartiges starres Adapterelement 30 zwischen der unteren Querstrebe 21 und der Stützfußanordnung-Querstrebe 27 fest angebracht vorhanden.

Im Verbindungszustand des Rahmengestells 1 und des Fahrzeugbodens 4 liegt eine unterseitig am Grundrahmen 2 vorhandene Anlageseite 8 des Verbindungsabschnitts 7 bzw. des Adapterelements 30 an einer Anlageseite 9 bzw. 10 der jeweiligen Bodenschiene 5, 6 an. Die Anlageseiten 9 bzw. 10 bilden zum Beispiel jeweils eine Oberseite der betreffenden Bodenschiene 5 bzw. 6.

An der ebenen unterseitigen Anlageseite 8 des Adapterelements 30 sind insgesamt vier daran senkrecht vorstehende, identisch gestaltete Steckelemente 11, 12, 13 und 14 vorhanden, wobei die zwei Steckelemente 11 und 12 auf einer ersten Linie voneinander beabstandet vorhanden sind und die zwei Steckelemente 13 und 14 auf einer zur ersten Linie parallelen Linie voneinander beabstandet vorhanden sind.

In der Seitenansicht gemäß Fig. 2 fluchten die Steckelemente 11 und 13 seitlich bzw. quer zur Bildebene, wie auch die beiden Steckelemente 12 und 14.

Jedes Steckelement 11-14 weist einen länglichen schlanken Schaftabschnitt 15 und einem zum Schaftabschnitt 15 durchmessergrößeren Kopfabschnitt 16 auf.

An den jeweiligen Anlageseiten 9, 10 der Bodenschienen 5, 6 bzw. auf deren Oberseiten sind mehrere auf die Steckelemente 11-14 passend abgestimmte Ausnehmungen 17 mit jeweils einem von außen überdeckten, innenliegenden bzw. holen Hinterschnittbereich 18 vorhanden. Die Ausnehmungen 17 sind regelmäßig nacheinander in Längsrichtung der Bodenschienen 5, 6 vorhanden, wobei die Ausnehmungen 17 jeweils einen breiteren Öffnungsabschnitt 17a und eine daran anschließenden schmaleren Öffnungsabschnitt 17b aufweisen, wobei der breitere Öffnungsabschnitt 17a und der schmalere Öffnungsabschnitt 17b abwechselnd bzw. alternierend vorhanden sind (s. Fig. 1a). Im Inneren der Bodenschienen 5, 6 wird im Bereich des schmäleren Öffnungsabschnitts 17b der Hinterschnittbereich 18 gebildet.

Die beiden Steckelemente 11 und 12 sind ausgebildet in zwei Ausnehmungen 17 der Bodenschiene 5 einzugreifen und die beiden Steckelemente 13 und 14 sind ausgebildet in zwei Ausnehmungen 17 der Bodenschiene 6 einzugreifen.

Die Verbindung des Grundrahmens 2 mit den Bodenschienen 5, 6 und damit dem Fahrzeugboden 4 erfolgt durch eine schrittweise Montage.

Im ersten Montageschritt wird, wie in Fig. 2 gezeigt, der aufrecht ausgerichtete Grundrahmen 2 gemäß Bewegungspfeil P1 in Fig. 2 mit seiner Anlageseite 8 in Richtung der Anlageseiten 9 und 10 der jeweiligen Bodenschiene 5, 6 so herangeführt, dass der jeweilige Kopfabschnitt 16 der vier Steckelemente 11-14 passend durch jeweils einen dazu passenden breiteren Öffnungsabschnitt 17a einer jeweiligen Ausnehmung 17 greift. Dabei bewegt sich jeder Kopfabschnitt 16 jeweils mit geringem Spiel an einem Rand des jeweiligen breiteren Öffnungsabschnitts 17a vorbei.

Der jeweilige Kopfabschnitt 16 der Steckelemente 11-14 wird so weit in Richtung P1 in das Innere der hohlen Bodenschienen 5, 6 eingeführt, bis die am Grundrahmen 2 unterseitige Anlageseite 8 des Adapterelements 7 an einem Gegenabschnitt bzw. an der Anlageseite 9 bzw. 10 der beiden Bodenschienen 5 bzw. 6 ansteht.

Nun wird im zweiten Montageschritt der Grundrahmen 2 relativ zu den positionsfesten Bodenschienen 5, 6 in deren Längsrichtung gemäß Bewegungspfeil P2 verschoben. In Richtung P2 wird der Grundrahmen 2 so weit verschoben, bis die Kopfabschnitte 16 jeweils unterhalb eines dazugehörigen schmaleren Öffnungsabschnitts 17b eine Hintergriffstellung einnehmen. Der Schaftabschnitt 15 der Steckelemente 11-14 ist so lang, dass die Kopfabschnitte 16 unterhalb der Wand der Oberseite der Bodenschienen 5, 6 vorbeiführbar ist.

Der Grundrahmen 2 kann im verschobenen Zustand nach dem zweiten Montageschritt bzw. nach Erreichen der endgültigen Montageposition aufgrund der zu den schmaleren Öffnungsabschnitten 17b durchmessergrößeren Kopfabschnitte 16 nicht nach oben entgegen der Richtung P1 von den Bodenschienen 5, 6 abgehoben werden. In dieser Hintergriffstellung muss der Grundrahmen 2 nur noch gegen eine Bewegung in Längsrichtung der Bodenschienen bzw. in Richtung P2 und entgegen der Richtung P2 fixiert werden, was zum Beispiel durch Verschraubung mit Schraubelementen oder durch Verrastung mit Rastelementen möglich ist.

Alternativ ist die Anbringung auf entsprechende Weise möglich, wenn das erfindungsgemäße Rahmengestell nur genau eine Bodenschiene mit einer Vielzahl von Ausnehmungen und das Adapterelement genau zwei Steckelemente auf einer Linie hintereinander aufweist. Das Adapterelement kann dann etwas schmaler ausfallen, als das in Fig. 1 gezeigte Adapterelement 7.

Die oben beschriebenen Anbringmöglichkeiten an einer oder an zwei Bodenschienen sind auch dann realisierbar, wenn die Stützfußanordnung 24 nur genau eine schräge Strebe aufweist, die mit oder ohne Stützfußanordnung-Querstrebe ausgebildet sein kann.

Grundsätzlich ist es nicht ausgeschlossen, zum Beispiel das Adapterelement 7 wegzulassen und/oder die Steckelemente 11-14 an einer Unterseite der unteren Querstrebe 21 und/oder einer Unterseite der Stützfußanordnung-Querstrebe 27 oder der Streben 25, 26 der Stützfußanordnung 24 vorzusehen.

Sämtlichen Ausführungsbeispielen gemeinsam ist die variable und flexible Positionierung des Grundrahmens 2 in Längsrichtung der Bodenschienen 5, 6 im Fahrzeug, abhängig von der jeweilig gewünschten Position der Sitzanordnung im Inneren des Fahrzeugs.

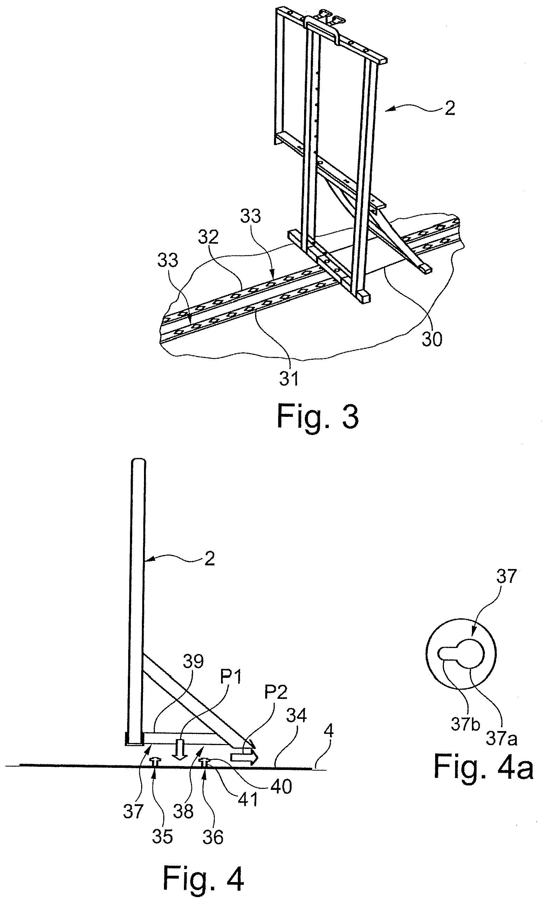

Eine andere vorteilhafte Erfindungsvariante zeigt Fig. 3, die sich von der Anordnung gemäß Fig. 1 und 2 allein durch ein anderes Ausnehmungs- bzw. Lochmuster in den beiden Bodenschienen 31 und 32 bzw. durch andere Ausnehmungen unterscheidet. Demgemäß sind in den beiden Bodenschienen 31, 32 voneinander getrennte Ausnehmungen 33 vorgesehen, die jeweils eine Schlüssellochform mit einem breiteren Öffnungsabschnitt und einem an den breiteren Öffnungsabschnitt offen anschließenden schmaleren Öffnungsabschnitt aufweisen. Bei der Montage ist nach dem Einstecken der Steckelemente in den breiteren Öffnungsabschnitt das Verschieben des Grundrahmens 2 im zweiten Montageschritt durch ein Anstoßen der Steckelemente mit deren Schaftabschnitt am Rand des schmaleren Öffnungsabschnitts begrenzt. Wenn der Grundrahmen 2 an einer anderen Stelle entlang der Bodenschienen 31, 32 positioniert werden soll, muss der gesamte Grundrahmen 2 durch Zurückschieben und Abheben von den Bodenschienen 31, 32 komplett von den Bodenschienen 31, 32 getrennt werden. Demgegenüber kann bei der Variante nach Fig. 1 und 2 der Grundrahmen 2 an den Bodenschienen 5, 6 verbleiben, um eine andere Position entlang der Bodenschienen 5, 6 einzunehmen. Es muss dazu lediglich die Fixierung gegen eine Bewegung des Grundrahmens 2 in Längsrichtung der Bodenschienen 5, 6 gelöst werden.

Eine weitere Variante eines erfindungsgemäßen Rahmengestells gemäß der Fig. 4 und 4a unterscheidet sich von den Ausführungsbeispielen nach den Fig. 1 bis 3 durch die Anordnung der Verbindungsmittel, die gleichartig zum Ausführungsbeispiel nach Fig. 3 ausgebildet sind, aber vertauscht sind, was die Position am Grundrahmen 2 und an einer Bodenschiene 34 angeht. Demgemäß sind zwei Steckelemente 35, 36 an einer Oberseite der Bodenschiene 34 nach oben vorstehend auf einer Linie vorgesehen und zwei Ausnehmungen 37 und 38 in Schlüssellochform hintereinander auf einer Längslinie an einer Unterseite eines Adapterelements 39. Die Ausnehmung 37 ist in Fig. 4a vergrößert in Einzelansicht senkrecht auf die Unterseite des Adapterelements 39 gezeigt. Der Abstand zwischen den beiden Steckelemente 35, 36 entspricht dem Abstand längs des Adapterelements 39 zwischen den beiden Ausnehmungen 37 und 38.

Im ersten Montageschritt wird der Grundrahmen 2 gemäß Bewegungspfeil P1 in Richtung der Bodenschiene 34 aufgesetzt, so dass beide in Draufsicht runde Kopfabschnitte 40 der Steckelemente 35, 36 durch den jeweiligen breiteren Öffnungsabschnitt 37a der Ausnehmungen 37, 38 mit geringem Spiel bzw. mit geringem äußeren Rundspaltmaß durchgreifen. Am Ende der Bewegung des Grundrahmens 2 in Richtung P1 stützt sich die Unterseite des Adapterelements 37 auf einer Oberseite der Bodenschiene 34 ab.

Im zweiten Montageschritt wird der Grundrahmen 2 relativ zur positionsfesten Bodenschienen 34 in Längsrichtung gemäß Bewegungspfeil P2 verschoben, bis ein zum Kopfabschnitt 40 schmalerer Schaftabschnitt 41 der jeweiligen Steckelemente 35, 36 in einen schmaleren Öffnungsabschnitt 37b der Ausnehmungen 37, 38 gelangt und an deren jeweiligem Rand ansteht. Nun muss der Grundrahmen 2 noch an der Bodenschiene 34 fixiert werden, zum Beispiel durch Anschrauben.

Die Anbindung des Grundrahmens kann auch mittels zwei parallelen Bodenschienen, die gemäß der Bodenschiene 34 ausgestaltet sind, und vier Steckelementen, die gemäß der Steckelemente 35, 36 gestaltet sind, auf entsprechende Weise eingerichtet werden. Damit wird anstelle einer Zweipunkt-Hintergriffverbindung gemäß Fig. 4 eine Vierpunkt-Hintergriffverbindung realisiert.

### Bezugszeichenliste:

- 1: Rahmengestell
- 2: Grundrahmen
- 3: Verbindungsmittel
- 4: Fahrzeugboden
- 5: Bodenschiene
- 6: Bodenschiene
- 7: Verbindungsabschnitt
- 8: Anlageseite
- 9: Anlageseite
- 10: Anlageseite
- 11: Steckelement
- 12: Steckelement
- 13: Steckelement
- 14: Steckelement
- 15: Schaftabschnitt
- 16: Kopfabschnitt
- 17: Ausnehmungen
- 17a: Öffnungsabschnitt
- 17b: Öffnungsabschnitt
- 18: Hinterschnittbereich
- 19: Vertikalstütze
- 20: Vertikalstütze
- 21: Querstrebe
- 22: Querstrebe
- 23: Querstrebe
- 24: Stützfußanordnung
- 25: Strebe
- 26: Strebe
- 27: Stützfußanordnung-Querstrebe
- 28: Verbindungsstück
- 29: Komponente
- 30: Adapterelement
- 31: Bodenschiene
- 32: Bodenschiene
- 33: Ausnehmung
- 34: Bodenschiene
- 35: Steckelement
- 36: Steckelement
- 37: Ausnehmung
- 37a: Öffnungsabschnitt
- 37b: Öffnungsabschnitt
- 38: Ausnehmung
- 39: Adapterelement
- 40: Kopfabschnitt
- 41: Schaftabschnitt

## Patentansprüche

1. Rahmengestell (1) einer Sitzanordnung eines Fahrzeugs, wobei das Rahmengestell (1) einen Grundrahmen (2) und Verbindungsmittel (3) zur lösbaren Verbindung des Grundrahmens (2) an einem Fahrzeugboden (4) aufweist, wobei die Verbindungsmittel (3) eine dem Fahrzeugboden (4) zuordenbare Bodenschiene (5, 6; 31, 32; 34) und einen auf die Bodenschiene (5, 6; 31, 32; 34) abgestimmten und dem Grundrahmen (2) zuordenbaren Verbindungsabschnitt (7) umfassen, wobei im Verbindungszustand eine Anlageseite (8) des Verbindungsabschnitts (7) an einer Anlageseite (9) der Bodenschiene (5, 6; 31, 32; 34) anliegt, **dadurch gekennzeichnet, dass** an einer Anlageseite (8) wenigstens zwei vorstehend gestaltete Steckelemente (11-14; 35, 36) mit einem Schaftabschnitt (15, 41) und einem zum Schaftabschnitt (15, 41) durchmessergrößeren Kopfabschnitt (16, 40) und an der anderen Anlageseite (9) zwei oder mehr auf die Steckelemente (11-14; 35, 36) passend abgestimmte Ausnehmungen (17; 33; 37, 38) mit einem Hinterschnittbereich (18) vorhanden sind, so dass die Verbindung durch eine Hintergriffverbindung zwischen den Steckelementen (11-14; 35, 36) und den zugehörigen Ausnehmungen (17; 33; 37, 38) realisierbar ist, wobei bei eingerichteter Hintergriffverbindung die Steckelemente (11-14; 35, 36) in die Ausnehmungen (17; 33; 37, 38) greifen und der Kopfabschnitt (16, 40) den Hinterschnittbereich (18) hintergreift.

2. Rahmengestell nach Anspruch 1, **dadurch gekennzeichnet, dass** der Verbindungsabschnitt ein Adapterelement (30; 39) umfasst, das dem Grundrahmen (2) zuordenbar ist.

3. Rahmengestell nach Anspruch 1 oder nach Anspruch 2, **dadurch gekennzeichnet, dass** eine Ausnehmung (17; 33; 37, 38) eine Öffnung auf der Anlageseite (9) umfasst, wobei die Öffnung einen ersten Öffnungsabschnitt (17a; 37a) und einen an den ersten Öffnungsabschnitt (17a; 37a) anschließenden zweiten Öffnungsabschnitt (17b; 37b) aufweist, wobei der erste Öffnungsabschnitt (17a; 37a) ein größeres Öffnungsmaß aufweist als der zweite Öffnungsabschnitt (17b; 37b).

4. Rahmengestell nach einem der vorhergehenden Ansprüche, **dadurch gekennzeichnet, dass** die mehreren Ausnehmungen (17) miteinander verbunden sind.

5. Rahmengestell nach einem der vorhergehenden Ansprüche, **dadurch gekennzeichnet, dass** an der Bodenschiene (5, 6; 31,32) eine Vielzahl von identisch gestalteten Ausnehmungen (17; 33) hintereinander entlang der Länge der Bodenschiene (5, 6; 31,32) vorhanden sind.

6. Rahmengestell nach einem der vorhergehenden Ansprüche, **dadurch gekennzeichnet, dass** die Steckelemente (11-14; 35, 36) starr und unbeweglich an der Anlageseite (8) vorhanden sind.

7. Rahmengestell nach einem der vorhergehenden Ansprüche, **dadurch gekennzeichnet, dass** die Bodenschiene (34) als Flachmaterial gebildet ist, auf deren Oberseite die Steckelemente (35, 36) ausgebildet sind.

8. Rahmengestell nach einem der vorhergehenden Ansprüche, **dadurch gekennzeichnet, dass** das Adapterelement (30) zwei erste Steckelemente (11, 12), die auf einer ersten geraden Linie beabstandet zueinander positioniert sind, und zwei zweite Steckelemente (13,14), die auf einer zweiten geraden Linie beabstandet zueinander positioniert sind, umfasst, wobei die erste und die zweite Linie parallel ausgerichtet sind.

9. Rahmengestell nach einem der vorhergehenden Ansprüche, **dadurch gekennzeichnet, dass** das Adapterelement (30, 39) als ein Bauteil ausgebildet ist, das zwischen einer Boden-Querstrebe (21) des Grundrahmens (2) und einem unterer Endbereich einer Stützfußanordnung (24) des Grundrahmens (2) angeordnet ist.

10. Rahmengestell nach einem der vorhergehenden Ansprüche, **dadurch gekennzeichnet, dass** Fixiermittel zur Fixierung des Grundrahmens (2) an der Bodenschiene (5, 6; 31, 32; 34) bei eingerichteter Hintergriffverbindung vorhanden sind, wobei mit den Fixiermitteln eine Verschieben des Grundrahmens (2) in Längsrichtung der Bodenschiene (5, 6; 31, 32; 34) in zumindest eine Schieberichtung unterbunden ist.

11. Rahmengestell nach einem der vorhergehenden Ansprüche, **dadurch gekennzeichnet, dass** an dem Adapterelement zwei erste Ausnehmungen, die auf einer ersten Linie beabstandet zueinander positioniert sind, und zwei zweite Ausnehmungen, die auf einer zweiten Linie beabstandet zueinander positioniert sind, vorgesehen sind, wobei die erste und die zweite Linie parallel ausgerichtet sind.

12. Rahmengestell nach einem der vorhergehenden Ansprüche, **dadurch gekennzeichnet, dass** die Verbindungsmittel zwei parallel ausgerichtete Bodenschienen (5, 6; 31, 32) umfassen.

13. Rahmengestell nach einem der vorhergehenden Ansprüche, **dadurch gekennzeichnet, dass** die Verbindungsmittel genau eine Bodenschiene (34) umfassen.

14. Sitzanordnung eines Fahrzeugs mit einem Rahmengestell (1) nach einem der vorhergehenden Ansprüche.

15. Fahrzeug mit einer Sitzanordnung nach Anspruch 14.
